# EUROPÄISCHE PATENTSCHRIFT

(11) **EP 3 859 138 B1**
(45) Veröffentlichungstag und Bekanntmachung des Hinweises auf die Patenterteilung: **02.11.2022**
(21) Anmeldenummer: 20000049.5
(22) Anmeldetag: 29.01.2020
(51) Int. Cl.: F02D 41/00, F02D 41/02, F02D 41/14, F02D 19/06, F02D 19/10

(54) **VERFAHREN ZUM BETRIEB EINES DIESELMOTORS ALS ZWEISTOFFMOTOR MIT DIESELÖL ODER GEMISCHEN VON AMMONIAK UND WASSERSTOFF**
METHOD FOR OPERATING A DIESEL ENGINE AS A TWO-FLUID ENGINE WITH DIESEL OIL OR MIXTURES OF AMMONIA AND HYDROGEN
PROCÉDÉ DE FONCTIONNEMENT D'UN MOTEUR DIESEL COMME MOTEUR À DEUX CARBURANTS TELS QUE GASOIL OU DES MÉLANGES D'AMMONIAQUE ET D'HYDROGÈNE

(43) Veröffentlichungstag der Anmeldung: 04.08.2021
(73) Patentinhaber: Ammonigy GmbH, 70563 Stuttgart (DE)
(72) Erfinder: Wannemacher, Gerhard, 64390 Erzhausen (DE)
(74) Vertreter: Steffan & Kiehne Patentanwälte PartG mbB

(56) Entgegenhaltungen:
- EP-A1- 2 690 280
- EP-A1- 3 501 626
- WO-A1-2019/035718
- DE-A1-102009 007 021
- US-A1- 2010 288 249

## Beschreibung

### Gebiet der Erfindung

Die vorliegende Erfindung betrifft ein Verfahren zum Betrieb einer Dieselmaschine als Zweistoffmotor mit zwei verschiedenen Brennstoffen, wobei als erster Brennstoff Diesel- oder Schweröl dient. Als zweiter Brennstoff wird ein gasförmiger Brennstoff verwendet, der aus Gemischen von Ammoniak und Wasserstoff besteht, wobei die Zündung der Gasmischung durch die Einspritzung einer geringen Menge an Dieselöl als Zündöl erfolgt.

### Hintergrund der Erfindung

Im Zuge der Energiewende im Verkehr, insbesondere im Schwerlastverkehr mit langen Reichweiten, wo die Elektromobilität an Kapazitätsgrenzen stößt (Schiffe, Bahnen auf nicht elektrifizierten Strecken, schwere LKW) werden als chemische Energieträger in erster Linie Wasserstoff und Methan sowie andere strombasierte, synthetische Kohlenwasserstoffe (sog. Power-to-Gas-Treibstoffe) genannt, die für mobile Anwendungen zum Einsatz kommen und die Freisetzung von Kohlendioxid vermeiden sollen.

Wasserstoff hat den Nachteil der schlechten Speicherfähigkeit, zur kohlendioxidneutralen Verwendung der Kohlenwasserstoffe in großem Massstab muß das zur Herstellung erforderliche Kohlendioxid aus der Luft gewonnen werden, wodurch zumindest derzeit eine wirtschaftliche Anwendung erheblich erschwert, wenn nicht verhindert wird. Auch CO₂-frei hergestellter Ammoniak (Herstellung aus Elektrolysewasserstoff und Luftstickstoff, sog. grüner Ammoniak) kann als strombasierter Brennstoff verwendet werden und bietet den Vorteil, dass er kostengünstig in flüssiger Form gespeichert und transportiert werden kann, keine Kohlenstoffquelle benötigt und damit CO₂-neutral bleibt sowie großtechnisch verfügbar ist.

Bei der Verbrennung von Ammoniak unter optimalen Bedingungen entsteht nur Wasser und Stickstoff. Wesentlicher Nachteil gegenüber konventionellen Kraftstoffen ist die schlechte Brennbarkeit bzw. die geringe Flammengeschwindigkeit von Ammoniak-Luft-Gemischen, die die Nutzung in Wärmekraftmaschinen erschwert. Zur Vermeidung des Nachteils kann dem Ammoniak eine geringe Menge an Wasserstoff zugesetzt werden, wobei der Wasserstoff quasi als Zünder für den schwer brennbaren Ammoniak wirkt. Mischungsverhältnisse bezogen auf den Energieinhalt zwischen Ammoniak und Wasserstoff von 4 : 1 bis etwa 10 : 1 sind möglich, um ein brennbares Gasgemisch zum Betrieb einer Wärmekraftmaschine zu erhalten. Auch die Verbrennung von reinem Ammoniak ist möglich, bringt aber Leistungs- und Wirkungsgradverluste mit sich. Der Wasserstoff kann aus Ammoniak selbst hergestellt werden, so dass letztendlich nur Ammoniak als Treibstoff zum Einsatz kommt. Die Wasserstoffherstellung kann dabei beispielsweise über einen energieautark laufenden Spaltreaktor (Patent EP3028990B1) erfolgen, der Ammoniak mit hohem Wirkungsgrad wieder in die Elemente aufspaltet (2 NH₃ => 3 H₂ + N₂). Der so erhaltene Wasserstoff (Der Reststickstoff durchläuft als Inertgas den Verbrennungsprozess.) wird dem Hauptstrom an Ammoniak beigemischt und das Gasgemisch kann wie üblich als Brennstoff in Wärmekraftmaschinen genutzt werden.

Wegen des im Vergleich zu konventionellen Antrieben mit erdgas-, benzin- oder dieselgetriebenen Kolbenmotoren höheren Aufwands eignet sich das Verfahren vor allem als Antrieb für Schiffe oder LKW, da dort die Mitführung von zusätzlichen Einrichtungen weniger ins Gewicht fällt als bei kleinen Fahrzeugen, die bevorzugt elektrisch angetrieben werden können. Auch der Antrieb von Lokomotiven auf nicht elektrifizierten Strecken ist möglich. Alternativ zum Spaltreaktor kann der Wasserstoff auch in separaten Gasflaschen mitgeführt werden.

Der Betrieb von 4-Takt-Verbrennungsmotoren mit Ammoniak-Wasserstoff-Mischungen als Brennstoff erfolgt dabei mit Fremdzündung, wie sie bei Benzin- oder Gasmotoren üblich ist. Schiffe, LKW und Lokomotiven werden aber üblicherweise mit Dieselmotoren betrieben. Insbesondere bei Schiffen und Lokomotiven handelt es sich um langlebige Investitionsgüter, die im Zuge der Energiewende voraussichtlich nicht vollständig durch neue Fahrzeuge ersetzt werden. Eine kostengünstige Alternative stellt die Umrüstung nur der Antriebsmaschine auf ein CO2-freies System dar. In diesem Fall erweist es sich als zweckmäßig, den vorhandenen Dieselmotor weitestgehend zu belassen und durch Verwendung von zusätzlichen Einrichtungen den Dieselmotor zum Zweistoffmotor umzurüsten. Nachfolgend werden unter den beiden Brennstoffen das bisher verwendete Diesel- oder Schweröl sowie die Ammoniak-Wasserstoff-Mischung verstanden.

Der Einsatz eines Zweistoffmotors erweist sich auch deshalb als zweckmäßig, weil in einer Einführungsphase von Ammoniak als Brennstoff nicht damit zu rechnen ist, dass Ammoniak-Tankstellen von Anfang an in ausreichender Zahl vorhanden sind. Bei fehlender Verfügbarkeit von Ammoniak sollte daher auf konventionellen Diesel zurückgegriffen werden können. Die vorliegende Anmeldung bezieht sich daher auf die Umrüstung von Dieselmaschinen auf den Zweistoffbetrieb. Der Stand der Technik offenbart mit der EP 3 501 626 A1 einen Ottomotor, welcher ein Ammoniak-Wasserstoff-Gemisch verbrennt, sowie mit der DE 10 2009 007021 A1 allgemein den Betrieb eines Kolbenmotors mit Ammoniak als Brennstoff am Beispiel eines Dieselmotors.

### Zusammenfassung der Erfindung

Der erfindungsgemäße Motor stellt eine Kolbenmaschine als Zweistoffmotor dar (dual-fuel-Prinzip). Als Basis für den Motor dient eine Dieselmaschine mit üblicher Direkteinspritzung. Als einer der beiden Brennstoffe wird der gewöhnliche Brennstoff für den Dieselbetrieb, z. B. Dieselöl oder Schweröl, verwendet. Für den Antrieb mit Dieselöl bleibt die Maschine ohne substanzielle Änderungen bestehen, die Betriebsweise entspricht der des gewöhnlichen Dieselbetriebes. Sofern ein bereits vorhandener Motor auf den Zweistoffbetrieb umgestellt werden soll, entspricht der Dieselbetrieb dem üblichen Betrieb vor der Umstellung.

Als zweiter Brennstoff werden Ammoniak-Wasserstoff-Mischungen in verschiedenen Mischungsverhältnissen eingesetzt. Die Verbrennung erfolgt ohne Änderungen der Kolbenmaschine, d. h. der Motorblock und die Zylinderköpfe können unverändert bleiben unverändert, geändert werden die Motorsteuerung und äußere Hilfseinrichtungen.

Der Betrieb von Kolbenmaschinen mit Ammoniak-Wasserstoff-Mischungen bedarf der Fremdzündung, da insbesondere bei dem anzustrebenden hohen AmmoniakAnteil eine Selbstzündung auch bei der höheren Kompression von Dieselmaschinen nicht zuverlässig erfolgt. Insgesamt hat ein Brenngas aus Ammoniak/Wasserstoff bei hohem Ammoniakanteil den Vorteil einer hohen Oktanzahl (weit oberhalb der von Benzin), so dass ein Betrieb auch bei der hohen Kompression eines Dieselmotors möglich ist und Frühzündungen vermieden werden. Soll ein vorhandener Dieselmotor ohne wesentliche Abänderung mit Ammoniak/Wasserstoff betrieben werden, fehlt die Fremdzündung z. B. in Form einer Zündkerze.

Zur Auslösung der Zündung soll daher eine geringe Menge an Dieselöl über die Einspritzdüsen in die Zylinder injiziert werden. Die Einspritzdüsen ersetzen damit die Zündkerzen. Die Einspritzmenge wird dabei im Sinne eines Zündstrahlmotors möglichst weit reduziert. Die üblichen Werte der über das Zündöl zugeführten Brennstoffmenge im Vergleich zur gesamten der Maschine zugeführten Brennstoffmenge liegen bei 1-10% bezogen auf die gesamte der Maschine zugeführte Feuerungswärmeleistung. Konstruktive Änderungen an der Kolbenmaschine bei Umstellung auf Ammoniak/Wasserstoff sind damit nicht nötig. Es genügt die Änderung der Einspritzmenge und die Korrektur des Einspritzzeitpunktes. Anstelle von Dieselöl als Zündöl kann auch OME (Oxymethlenether) verwendet werden, womit die Bildung von Rußpartikeln ausgeschlossen wird. Wegen der geringen erforderlichen Menge sind die Mehrkosten von OME gegenüber Dieselöl nur noch von untergeordnetem Interesse.

Im Dieselbetrieb wird die Maschine im Allgemeinen mit hohem Luftüberschuß gefahren. Die Leistung wird dabei über die Einspritzmenge geregelt. Bei Gasmotoren wird die Leistung in erster Linie über die Füllung bzw. den Füllungsgrad der Zylinder eingestellt, während die Gemischzusammensetzung des angesaugten Gases weitgehend konstant gehalten wird. Die Zylinderfüllung wird dabei über eine Drosselklappe im Luftansaugkanal festgelegt. Ein hoher Luftüberschuß wie beim Dieselmotor ist insbesondere im Teillastbereich bei Gasmotoren und damit auch bei mit Ammoniak/Wasserstoff betriebenen Motoren nicht möglich, weil das Gasgemisch dann außerhalb der Zündgrenzen liegt. Die Zündgrenzen liegen bei hohen Anteilen von Ammoniak etwa bei A<1,5, so dass bei noch magerer Mischung Zündaussetzer die Folge sind. Anzustreben sind Werte für die Brennstoffmischung von etwa 0,9<λ<1,5. Zur Leistungsregelung beim Betrieb mit Ammoniak/Wasserstoff ist deshalb eine zusätzliche Drosselklappe zur Begrenzung der Zylinderfüllung in den Ansaugkanal einzubauen. Bei Dieselbetrieb bleibt diese Klappe ganz geöffnet. Eine evtl. für den Dieselbetrieb vorhandene Begrenzungsklappe bleibt bei Gasbetrieb geöffnet. Über die zusätzliche Drosselklappe wird die Zylinderfüllung und damit die Leistung der Maschine bei Gasbetrieb gesteuert.

Die angesaugte Luftmenge kann z. B. über einen Luftmassenmesser vor der Drosselklappe bestimmt werden. Über die entsprechend geregelte Zudosierung von Ammoniak/Wasserstoff zweckmäßigerweise nach dem Luftmassenmesser kann der gewünschte λ-Wert der Brennstoff-Luft-Mischung eingestellt werden. Die Messung des λ-Wertes kann wie üblich über A-Sonden auf der Abgasseite erfolgen.

Wegen der durch die Verwendung von Ammoniak als Brennstoff höheren Stickoxidmengen (NOX) im Abgas sind für den Fall des Gasbetriebs besondere Maßnahmen zur Abgasreinigung zu treffen. Bei Dieselbetrieb bleibt die Abgasführung gegenüber dem Betrieb vor der Umrüstung unverändert bestehen. Bei Gasbetrieb wird am Motorauslaß auf einen zweiten Abgasstrang umgeschaltet, um die Abgaswege für Diesel- und Ammoniak-Wasserstoff-Betrieb getrennt zu halten. In den Abgasstrang für Ammoniak-Wasserstoff-Betrieb wird zunächst ein Dieselpartikelfilter geschaltet, um die nachfolgenden Einrichtungen zur NOX-Reduktion vor Verschmutzung durch restliche Rußpartikel zu schützen. Für die NOX-Zersetzung gibt es dann je nach Betriebsart des Motors verschiedene Möglichkeiten.
1) Der Gasbetrieb erfolgt bei λ<1, bevorzugt bei 0,98<λ<1. In diesem Fall wird ein edelmetallhaltiger Drei-Wege-Katalysator wie bei der Abgasreinigung von Benzinmotoren dem Dieselpartikelfilter nachgeschaltet. Sofern ein schwach fettes Gemisch eingehalten wird, kann NOX in diesem Katalysator weitgehend vollständig beseitigt werden. Je nach A-Wert verbleiben geringe Mengen von Brennstoffresten im Abgas. Dazu gehören CO und Kohlenwasserstoffe als Reste aus dem Zündöl sowie Wasserstoff und Ammoniak. Sollten die Konzentrationen dieser Stoffe nach dem Drei-Wege-Katalysator nicht auf die erforderlichen Werte abgesenkt werden können, kann nach dem Drei-Wege-Katalysator eine geringe Luftmenge zugesetzt werden, so dass ein λ-Wert grösser eins erreicht wird. Die restlichen Brennstoffe können dann in einem weiteren nachgeschalteten edelmetallhaltigen Drei-Wege-Katalysator umgesetzt werden. Dieses Verfahren wurde bereits in der Offenlegungsschrift DE10 2017 011 833A1 beschrieben.
2) Der Gasbetrieb erfolgt bei λ>1, bevorzugt bei 1<λ<1,05. In diesem Fall kann nach dem Dieselpartikelfilter ebenfalls ein edelmetallhaltiger Drei-Wege-Katalysator nachgeschaltet werden. Vor diesem Katalysator wird eine geringe Ammoniak zugeführt, so dass im Abgas der λ-Wert von λ>1 auf λ<1 abgesenkt wird, wobei der λ-Wert möglichst nahe an eins auf der brennstoffreichen Seite gehalten wird. Die NOX werden dann über die Umsetzung mit Ammoniak beseitigt.
3) Der Gasbetrieb erfolgt bei λ>1, bevorzugt bei 1<λ<1,6. Dieser Fall unterscheidet sich von 2) dadurch, dass nicht mehr mit Ammoniakzusatz im Abgasstrom die brennstoffreiche Seite erreicht werden kann, weil damit ein zu hoher Ammoniakverbrauch einhergehen würde und weiterhin die Überhitzung des unter 2) vorgesehenen Drei-Wege-Katalysator droht. In diesem Fall wird ebenfalls Ammoniak nach dem Partikelfilter dem Abgasstrom zugesetzt. Die NOX-Zersetzung erfolgt dann in einem nachgeschalteten SCR-Katalysator in der Weise, dass nur die für die Zersetzung des NOX nötige Ammoniakmenge zugesetzt wird und das Abgasgemisch auf der brennstoffarmen Seite bleibt. Die Regelung erfolgt über NOX-Sensoren vor und nach dem SCR-Katalysator.

Über das beschriebene Verfahren kann ein vorhandener Dieselmotor auf den Zweistoff-Betrieb umgebaut werden, wobei einerseits Dieselöl oder Schweröl sowie andererseits im Gasbetrieb Ammoniak-Wasserstoff-Mischungen als Brennstoff zum Einsatz kommen. Über die vorgeschlagene Abgasreinigung könne die Schadstoffe zuverlässig beseitigt werden. Die Abgasreinigung kann unverändert auch beim Einsatz von OME anstelle von Dieselöl als Zündöl beibehalten werden. Eine Rußbildung wird dabei vollständig unterdrückt.

## Patentansprüche

1. Verfahren zum Betrieb einer Dieselmaschine, die auf Zweistoffbetrieb, nämlich den Betrieb mit Diesel- bzw. Schweröl und den Betrieb mit einem gasförmigen Brennstoff, bestehend aus Mischungen von Ammoniak und Wasserstoff, umgerüstet ist, **dadurch gekennzeichnet, dass**
- als Basis eine Dieselmaschine mit Direkteinspritzung dient, die für den Dieselbetrieb unverändert bleibt,
- im Falle des Gasbetriebs der gasförmige Brennstoff im Ansaugkanal beigemischt wird und die Direkteinspritzung mit Dieselöl im Sinne eines Zündstrahlmotors soweit zurückgenommen wird, dass sie im Wesentlichen nur noch zur Zündung des Ammoniak-Wasserstoff-Luft-Gemisches dient, wobei der auf den Energieinhalt des Ammoniak-Wasserstoffgemisches bezogene Energieinhalt des Wasserstoffs zwischen 2-50%, bevorzugt zwischen 5-25%, liegt,
- wobei die Leistung des Motors im Gasbetrieb über den Füllungsgrad der Zylinder wie beim Benzinmotor durch eine entsprechende Einstellung einer Drosselklappe im Ansaugkanal geregelt wird und wobei im Gasbetrieb ein Brennstoff-Luft-Verhältnis von 0,9<λ<2 eingehalten wird.

2. Verfahren nach Anspruch 1, wobei im Gasbetrieb zur Zündung des Ammoniak-Wasserstoff-Luft-Gemisches der Energieinhalt des Dieseltreibstoffs, bezogen auf die gesamte der Kolbenmaschine zugeführte Energie 0,01-30%, bevorzugt 0,1-10%, beträgt.

3. Verfahren nach den Ansprüchen 1-2, bei dem ein anderer Kohlenwasserstoff als Zünder verwendet wird.

4. Verfahren nach Anspruch 3, wobei der andere Kohlenwasserstoff synthetischer, nach Fischer-Tropsch hergestellter Dieselkraftstoff oder Oxymethylenether ist.

5. Verfahren nach den Ansprüchen 1-4, bei dem anstelle von Wasserstoff eine Gasmischung von Wasserstoff und Stickstoff, die durch Ammoniakspaltung hergestellt wurde, eingesetzt wird, wobei die Gasmischung ebenfalls Wasserdampf enthalten kann.

6. Verfahren nach den Ansprüchen 1-5, bei dem im Gasbetrieb zur Abgasreinigung ein wie für Benzinmotoren üblicher edelmetallhaltiger Drei-Wege-Abgaskatalysator verwendet wird, wobei für das Brennstoff-Luft-Gemisch ein λ-Wert von 0,9<λ<1, bevorzugt 0,98<λ<1 eingestellt wird.

7. Verfahren nach Anspruch 6, bei dem nach dem Drei-Wege-Katalysator zur Zersetzung von überschüssigem Ammoniak ein Ammoniak-Spaltkatalysator eingesetzt wird.

8. Verfahren nach Anspruch 6, bei dem nach dem Drei-Wege-Katalysator eine geringe Luftmenge zugeführt wird, so dass der λ-Wert über 1 steigt, und in einem weiteren nachgeschalteten Oxidationskatalysator evtl. noch vorhandene Ammoniakreste zu Wasser und Stickstoff oxidiert werden.

9. Verfahren nach den Ansprüchen 1-5, bei dem im Gasbetrieb des Motors für das Brennstoff-Luft-Gemisch ein λ-Wert von λ>1, eingestellt wird, wobei zur Abgasreinigung ein wie für Benzinmotoren üblicher edelmetallhaltiger Drei-Wege-Abgaskatalysator verwendet wird und vor diesem Abgaskatalysator zusätzlicher Ammoniak in das Abgas eingespeist wird, so dass für das Abgas ein A-Wert von λ=1 oder λ<1 eingestellt wird.

10. Verfahren nach den Ansprüchen 1-5, bei dem im Gasbetrieb des Motors für das Brennstoff-Luft-Gemisch ein λ-Wert von λ>1, eingestellt wird, wobei zur Abgasreinigung ein SCR-Katalysator eingesetzt wird und vor dem Katalysator die zur Zersetzung der Stickoxide erforderliche Menge an Ammoniak eingedüst wird.

## Claims

1. A method for operating a Diesel machine that is retrofitted for dual fuel operation, that is the operation with Diesel or heavy oil and the operation with a gaseous fuel consisting of mixtures of ammonia and hydrogen, **characterised in that**
- a Diesel engine with direct injection serves as the basis that rests unmodified for the Diesel operation,
- in the case of operation with gaseous fuels, the gaseous fuel is admixed in the intake duct and the direct injection with Diesel oil is reduced, in the sense of a pilot injection engine, to the extent that it substantially only serves for the ignition of the ammonia-hydrogen-air mixture, the energy content of hydrogen relative to the energy content of the ammonia-hydrogen mixture being between 2 - 50 %, preferably between 5 - 25 %,
- wherein the power of the engine during operation with gaseous fuels is regulated via the degree of filling of the cylinders, as in the gasoline engine, by a corresponding adjustment of a throttle valve in the intake duct, and wherein during operation with gaseous fuels an air-fuel ratio of 0.9 < λ < 2 is maintained.

2. The method according to claim 1, wherein during the operation with gaseous fuels the energy content of the Diesel fuel for the ignition of the ammonia-hydrogen-air-mixture is 0.01 to 30 %, preferably 0.1 to 10 %, relative to the total energy supplied to the piston engine.

3. The method according to claims 1 to 2, wherein another hydrocarbon is used as igniter.

4. The method according to claim 3, wherein the other hydrocarbon is synthetic Diesel fuel produced according to Fischer-Tropsch, or oxymethylene ether.

5. The method according to claims 1 to 4, wherein a gas mixture of hydrogen and nitrogen produced by ammonia cracking is used instead of hydrogen, wherein the gas mixture may also contain water vapor.

6. The method according to claims 1 to 5, wherein during operation with gaseous fuels a three-way exhaust gas catalytic converter containing noble metal, as commonly employed for gasoline engines, is used for exhaust gas purification, wherein a λ value of 0.9 < λ < 1, preferably 0.98 < λ < 1, is adjusted for the fuel-air mixture.

7. The method according to claim 6, wherein an ammonia cracking catalytic converter for breaking down surplus ammonia is employed after the three-way catalytic converter.

8. The method according to claim 6, wherein a small amount of air is supplied after the three-way catalytic converter so that the λ value is raised above 1, and any ammonia residues possibly still present are oxidized to water and nitrogen in another downstream oxidizing catalytic converter.

9. The method according to claims 1 to 5, wherein during operation of the motor with gaseous fuels a λ value Wert of λ > 1 is set for the fuel-air mixture, wherein a three-way exhaust gas catalytic converter containing noble metal, as commonly employed for gasoline engines, is used for exhaust gas purification, and additional ammonia is fed into the exhaust gas upstream of this exhaust gas catalytic converter so that a λ value of λ = 1 or λ < 1 is adjusted for the exhaust gas.

10. The method according to claims 1 to 5, wherein during operation of the motor with gaseous fuels a λ value Wert of λ > 1 is adjusted for the fuel-air mixture, wherein an SCR catalytic converter is employed for exhaust gas purification and the amount of ammonia required for breaking down the nitrogen oxides is injected upstream of the catalytic converter.

## Revendications

1. Procédé pour le fonctionnement d'une machine diesel convertie pour le fonctionnement bicarburant, à savoir le fonctionnement à diesel ou huile lourde, et le fonctionnement à un combustible gazeux consistant à mélanges d'ammoniac et hydrogène, le procédé étant **caractérisé en ce que**
- une machine diesel avec injection directe qui reste inchangée pour le fonctionnement à diesel est utilisée comme base,
- dans le cas du fonctionnement à gaz, le combustible gazeux est ajouté dans la conduite d'admission, et l'injection directe avec diesel est réduite, dans le sens d'un moteur à injection pilote, dans la mesure qu'elle sensiblement ne sert qu'à l'allumage du mélange ammoniac-hydrogène-air, le contenu énergétique de l'hydrogène par rapport au contenu énergétique du mélange ammoniac-hydrogène étant entre 2 à 50 %, de préférence entre 5 à 25 %,
- dans lequel la puissance du moteur pendant le fonctionnement à gaz est réglée via le degré d'admission des cylindres, comme pour un moteur à essence, par un ajustement correspondant d'un étrangleur dans la conduite d'admission, et dans lequel pendant le fonctionnement à gaz un rapport combustible-air de 0,9 < λ < 2 est maintenu.

2. Procédé selon la revendication 1, dans lequel, pour l'allumage du mélange ammoniac-hydrogène-air pendant le fonctionnement à gaz, le contenu énergétique du diesel est de 0,01 à 30 %, de préférence de 0,1 à 10 %, par rapport à l'énergie totale introduite dans la machine à piston.

3. Procédé selon les revendications 1 à 2, dans lequel un autre hydrocarbure est utilisé en tant qu'agent d'allumage.

4. Procédé selon la revendication 3, dans lequel l'autre hydrocarbure est un carburant diesel synthétique produit selon Fischer-Tropsch, ou l'éther d'oxyméthylène.

5. Procédé selon les revendications 1 à 4, dans lequel un mélange d'hydrogène et azote produit par craquage d'ammoniac est utilisé au lieu de l'hydrogène, le mélange de gaz pouvant en outre contenir du vapeur d'eau.

6. Procédé selon les revendications 1 à 5, dans lequel, pendant le fonctionnement à gaz, un catalyseur de gaz d'échappement à trois voies contenant des métaux précieux, comme il est communément employé dans les moteurs à essence, est utilisé pour l'épuration des gaz d'échappement, dans lequel une valeur λ de 0,9 < λ < 1, de préférence 0,98 < λ < 1, est ajustée pour le mélange combustible-air.

7. Procédé selon la revendication 6, dans lequel un catalyseur de craquage d'ammoniac est utilisé après le catalyseur à trois voies afin de décomposer l'ammoniac excédentaire.

8. Procédé selon la revendication 6, dans lequel après le catalyseur à trois voies une petite quantité d'air est introduite, de telle manière que la valeur λ est augmentée au-dessus de 1, et les résidus d'ammoniac éventuellement encore présents sont oxydés en eau et en azote dans un autre catalyseur d'oxydation placé en aval.

9. Procédé selon les revendications 1 à 5, dans lequel, pendant le fonctionnement à gaz du moteur, une valeur λ pour le mélange combustible-air de λ > 1 est ajustée, dans lequel un catalyseur de gaz d'échappement à trois voies contenant des métaux précieux, comme il est communément employé dans les moteurs à essence, est utilisé pour l'épuration des gaz d'échappement, et de l'ammoniac supplémentaire est alimenté au gaz d'échappement avant ce catalyseur, de telle manière qu'une valeur λ de λ = 1 ou λ < 1 est ajustée pour le gaz d'échappement.

10. Procédé selon les revendications 1 à 5, dans lequel, pendant le fonctionnement à gaz du moteur, une valeur λ pour le mélange combustible-air de λ > 1 est ajustée, dans lequel un catalyseur RCS est utilisé pour l'épuration des gaz d'échappement, et la quantité d'ammoniac nécessaire pour la décomposition des oxydes nitriques est injectée avant le catalyseur.
